# EUROPEAN PATENT APPLICATION

(11) **EP 4 700 310 A1**
(43) Date of publication of application: **25.02.2026**
(21) Application number: 25797539.1
(22) Date of filing: 24.04.2025
(51) Int. Cl.: F25D 11/00

(54) **VEHICLE-MOUNTED REFRIGERATOR**

(30) Priority: 30.04.2024 CN 202420937576 U; 30.04.2024 CN 202410540328; 17.05.2024 CN 202421087565 U; 21.11.2024 CN 202422851580 U
(71) Applicant: Anker Innovations Technology Co., Ltd., Changsha, Hunan 410000 (CN)
(72) Inventor: HAN, Cong, Changsha, Hunan 410000 (CN)
(74) Representative: Wörz, Volker Alfred
(86) International application number: PCT/CN2025/090955
(87) International publication number: WO 2025/228233

(57) **Abstract**

The present application may provide a vehicle refrigerator. The vehicle refrigerator may include a cabinet, a door, a fan and a refrigeration assembly. The cabinet may define a refrigeration cavity and a first opening. The first opening may be in communicating with the refrigeration cavity. The door may movably over the first opening. The fan may be arranged on a side of the door close to the refrigeration cavity. The refrigeration assembly may be mounted on the cabinet, and may be configured to cool the refrigeration cavity. The present disclosure may enhance cooling uniformity and cooling rate of the vehicle refrigerator.

## Description

The present disclosure claims priority to the Chinese patent Application No. 202410540328.6 filed on April 30, 2024, entitled "vehicle refrigerator with speed-increasing circulating air system", which is herein incorporated by reference in its entirety. The present disclosure claims priority to the Chinese patent Application No. 202420937576.X filed on April 30, 2024, entitled "vehicle refrigerator with circulating air system", which is herein incorporated by reference in its entirety. The present disclosure claims priority to the Chinese patent Application No. 202421087565.3 filed on May 17, 2024, entitled "vehicle refrigerator", which is herein incorporated by reference in its entirety.

### TECHNICAL FIELD

The present disclosure relates to the field of vehicle refrigerator technologies, particularly to a vehicle refrigerator.

### BACKGROUND

With the continuous development of science and technology, vehicle refrigerators have increasingly appeared in human lives. Although inner walls of vehicle refrigerators of related art are usually equipped with refrigeration assemblies, convective air flow in the refrigeration cavity is weak, resulting in a relatively poor cooling effect.

### SUMMARY

The present disclosure may provide a vehicle refrigerator. The vehicle refrigerator may enhance cooling uniformity and cooling rate of the vehicle refrigerator, thereby improving a cooling effect.

To solve the aforementioned technical problems, the present disclosure may provide a vehicle refrigerator. The vehicle refrigerator may include a cabinet, a door, a fan and a refrigeration assembly. The cabinet may define a refrigeration cavity and a first opening. The first opening may be in communicating with the refrigeration cavity. The door may movably over the first opening. The fan may be arranged on a side of the door close to the refrigeration cavity. The refrigeration assembly may be mounted on the cabinet, and may be configured to cool the refrigeration cavity.

The beneficial effects of the present disclosure may be as follows. The vehicle refrigerator may include the cabinet, the door, the fan and the refrigeration assembly. The cabinet may define the refrigeration cavity and the first opening. The first opening may be in communicating with the refrigeration cavity. The door may movably over the first opening. The fan may be arranged on the side of the door close to the refrigeration cavity. The refrigeration assembly may be mounted on the cabinet, and may be configured to cool the refrigeration cavity. Through the arrangement of the fan, an air flow convective effect in the refrigeration cavity may be enhanced, the cooling uniformity and the cooling rate in the refrigeration cavity may be further increased, thereby increasing the cooling effect. Further, the fan may be arranged on the side of the door close to the refrigeration cavity for easy assembly and operation of the fan. The fan may be arranged on the side of the door close to the refrigeration cavity to enhance the air flow convection effect in the refrigeration cavity. The refrigeration assembly may be mounted in the cabinet, which may be conducive to increasing positional stability of the refrigeration assembly and thereby enhancing reliability of the vehicle refrigerator.

### BRIEF DESCRIPTION OF THE DRAWINGS

To more clearly illustrate technical schemes in embodiments of the present disclosure or the related art, a brief introduction to the accompanying drawings required in the embodiments would be provided below. It may be obvious that, the accompanying drawings described below are merely some embodiments of the present disclosure. For those skilled in the art, additional drawings may be obtained based on these drawings without creative efforts.
Fig. 1 is a schematic structural diagram of an embodiment of a vehicle refrigerator of the present disclosure.
Fig. 2 is a schematic side view of the embodiment of Fig. 1.
Fig. 3 is a schematic structural diagram of an embodiment of a door and an axial flow fan of the present disclosure.
Fig. 4 is a schematic bottom view of the door and the axial flow fan of an embodiment of the present disclosure.
Fig. 5 is a schematic structural diagram of an embodiment of a door and a centrifugal fan of the present disclosure.
Fig. 6 is a schematic bottom view of an embodiment of the door and the centrifugal fan of the present disclosure.
Fig. 7 is a schematic structural diagram of another embodiment of the vehicle refrigerator of the present disclosure.
Fig. 8 is a schematic structural diagram of a cold air circulation cover plate of the present disclosure.
Fig. 9 is a schematic structural diagram of a cross section of the cold air circulation cover plate of the present disclosure.
Fig. 10 is a schematic structural diagram of another embodiment of a part of a structure of the vehicle refrigerator of the present disclosure.
Fig. 11 is a schematic structural diagram of yet another embodiment of a part of the structure of the vehicle refrigerator of the present disclosure.

### DETAILED DESCRIPTION

The following would describe in detail and clearly the technical schemes of embodiments of the present disclosure in combination with the drawings. Obviously, the described embodiments are only a part of the embodiments of the present disclosure, not all of them. All other embodiments obtained by those of ordinary skills in the art without creative efforts based on the embodiments of the present disclosure may fall within the protection scope of the present disclosure.

It should be noted that, if the embodiments of the present disclosure involve a directional indication (such as up, down, left, right, front, rear...), the directional indication may be only for explaining relative position relationships, motion, or the like among components under a particular posture (as illustrated in the drawings). If that particular posture changes, the directional indication may change accordingly.

Furthermore, if there are descriptions of "first", "second", or the like in the embodiments of the present disclosure, such descriptions of "first", "second", or the like are only for descriptive purposes, and should not be understood as indicating or suggesting relative importances or implicitly indicating a quantity of the technical features indicated. Therefore, the features preceded by "first", "second" may explicitly or implicitly include at least one of the features. Additionally, the technical schemes of various embodiments may be combined with each other, but such combinations must be based on what may be implemented by a person of ordinary skills in the art. If a combination of technical schemes leads to contradictions or is unimplementable, it should be considered that such a combination does not exist, and is not within a protection scope claimed by the present disclosure.

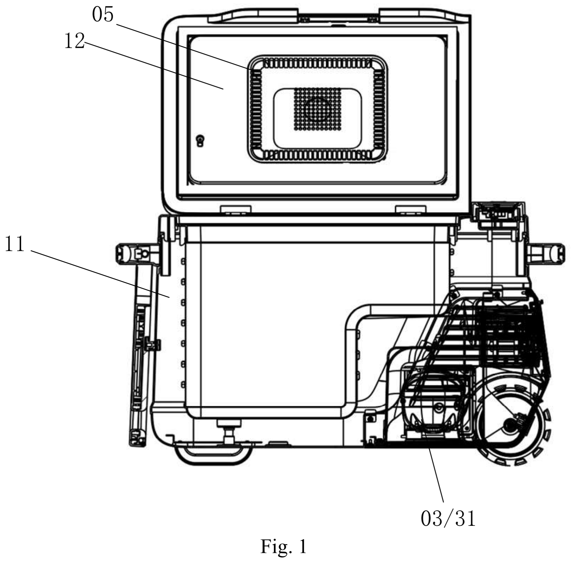

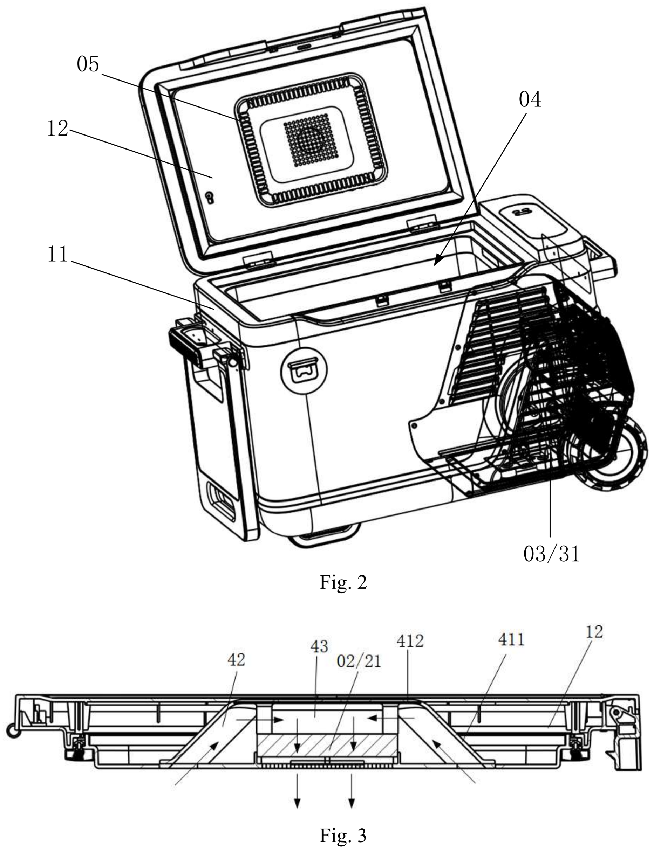

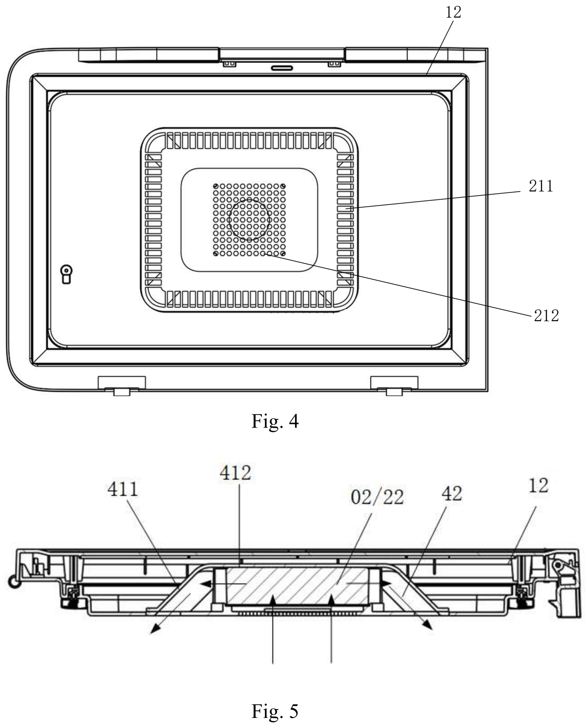

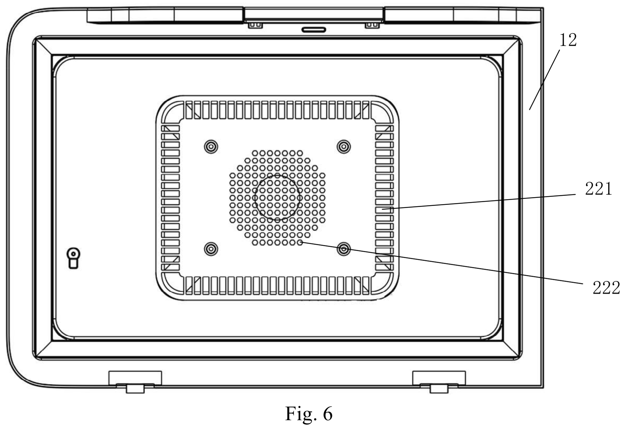

As illustrated in Fig. 1 to Fig. 6, the present disclosure may first propose a vehicle refrigerator. Fig. 1 may be a schematic structural diagram of an embodiment of the vehicle refrigerator of the present disclosure. Fig. 2 may be a schematic side view of the embodiment of Fig. 1. Fig. 3 may be a schematic structural diagram of an embodiment of a door and an axial flow fan of the present disclosure. Fig. 4 may be a schematic bottom view of the door and the axial flow fan of an embodiment of the present disclosure. Fig. 5 may be a schematic structural diagram of an embodiment of the door and the centrifugal fan of the present disclosure. Fig. 6 may be a schematic bottom view of an embodiment of the door and the centrifugal fan of the present disclosure. The vehicle refrigerator may include a cabinet 11, a door 12, a fan 02, and a refrigeration assembly 03. The cabinet 11 may define a refrigeration cavity 04 and a first opening. The first opening may be in communication with the refrigeration cavity 04. The door 12 may movably cover the first opening. The fan 02 may be arranged on a side of the door 12 close to the refrigeration cavity 04. The refrigeration assembly 03 may be mounted in the cabinet 11 to cool the refrigeration cavity 04.

Specifically, the fan 02 may operate within the refrigeration cavity 04. The fan 02 may be able to enhance convective effect of air flow within the refrigeration cavity 04. In this way, the air flow convective within the refrigeration cavity 04 may be enhanced without the necessity of being in communication with atmosphere air flow. Convective intensity may also be adjusted by regulating a wind force magnitude of the fan 02.

In some embodiments, the fan 02 may or may not operate in sync with the refrigeration assembly 03, which is not specifically limited here. Since the fan 02 can enhance the air flow convection in the refrigeration cavity 04, it is not necessary to define an air vent in communication with the atmosphere for the refrigeration cavity 04 in order to achieve a stronger air flow convection effect. For instance, during a production assembly process, the fan 02 and the refrigeration assembly 03 may be assembled separately. The refrigeration assembly 03 may operate independently to cool the refrigeration cavity 04. The fan 02 may operate independently to enhance the air flow convection effect inside the refrigeration cavity 04. Therefore, refrigeration approaches of the refrigeration assembly may be not limited herein in the present disclosure. For example, in one application scenario, as illustrated in Fig. 1, the refrigeration assembly 03 may include a refrigeration member 31 (e.g., a compressor) and an evaporator (not illustrated in the drawings). The refrigeration member 31 may include the compressor, a condenser, a condenser fan, or the like. The evaporator may be arranged outside the refrigeration cavity 04, and may achieve refrigeration of the refrigeration cavity 04 by cooling the cabinet 11.

For another example, in another application scenario (not illustrated in the drawings), the refrigeration assembly may also be a refrigeration case arranged inside the refrigeration cavity, which is not specifically limited here.

A beneficial effect of the aforementioned configuration may be that: the arrangement of the fan 02 may facilitate the air flow convective effect in the refrigeration cavity 04, thereby improving a cooling uniformity and a cooling rate in the refrigeration cavity 04, and thus enhancing the cooling effect. Further, the fan 02 may be arranged on the side of the door 12 close to the refrigeration cavity 04, which may be convenient for assembly and operation of the fan 02, and to enhance the air flow convection effect in the refrigeration cavity 04. The refrigeration assembly 03 may be mounted in the cabinet 11, which may be conducive to improving a positional stability of the refrigeration assembly 03, thereby enhancing the reliability of the vehicle refrigerator.

In some embodiments, an inner wall of the door 12 may define a recess. The recess may be in communication with the refrigeration cavity 04. The fan 02 may be at least partially arranged within a mounting cavity defined by the recess.

In some embodiments, the inner wall of the door 12 may define the recess in communication with the refrigeration cavity 04. By providing the fan 02 in the mounting cavity defined by the recess, an interference of the fan 02 to an available space within the refrigeration cavity 04 may be reduced, a stability of the fan 02 may be increased, and an influence of external interference on the fan 02 may be reduced. Further, the recess is defined by the inner wall of the door 12, a wall defining the recess may be integrally molded with the inner wall, which increases a stability of the recess.

In some embodiments, the fan 02 may be entirely mounted in the mounting cavity defined by the recess, to further increase an anti-interference performance of the fan 02 and an aesthetic appeal of the vehicle refrigerator.

In some embodiments, the fan 02 may be spaced apart from a side wall 411 of the recess, so as to define a first air duct 42 in communication with the refrigeration cavity 04.

The first air duct 42 may enhance a communication effect between the refrigeration cavity 04 and an air inlet and/or an air outlet of the fan 02, thereby increasing a convective enhancing effect of the fan 02 on the air flow within the refrigeration cavity 04. The fan 02 may be spaced apart from the side wall 411 of the recess, so as to define the first air duct 42, which is in communication with the refrigeration cavity 04. This design structure may be simple and does not require complex production design, thus a cost of production and assembly may be reduced.

In another embodiment, at least a part of the fan may be spaced apart from the side wall of the recess. A region of the fan, which is not spaced apart from the side wall of the recess, may be provided with a through hole communicating with the first air duct and with the refrigeration cavity.

In some embodiments, as illustrated in Fig. 3 and Fig. 4, the fan 02 may include an axial flow fan 21. The axial flow fan 21 may be spaced apart from a bottom wall 412 of the recess to define a second air duct 43. The second air duct 43 may be in communication with the air vent of the axial flow fan 21 and with the first air duct 42.

The design of an impeller and blades of the axial flow fan 21 may allow that, when the air flow flows out of the fan through the air outlet of the fan, the air flow may be almost parallel to rotational axis of the blades. The air inlet 211 and the air outlet 212 of the axial flow fan 21 may be arranged in a straight line parallel to the rotational axis of the blades. The axial flow fan 21 may be easily mounted. The definition of the second air duct 43 may enable the air inlet 211 of the axial flow fan 21 to be in communication with the first air duct 42 through the second air duct 43, and may be further in communication with the refrigeration cavity 04, thereby facilitating improvement of a blowing effect of the axial flow fan 21. The definition of the first air duct 42 and the second air duct 43 may facilitating the air flow to turn after passing through the first air duct 42, and then to enter the second air duct 43, thereby facilitating the air flow to enter the air inlet 211 of the axial flow fan 21. The second air duct 43 may be defined by arranging the axial flow fan 21 to be spaced apart from the bottom wall 412 of the recess, which may be simple in structure and convenient for production and mounting.

In some embodiments, a specific shape of the recess may be not limited. For example, the inner wall of the recess may be configured in a streamlined shape. In this way, an air guiding effect of an air duct may be improved, a resistance of the air duct may be reduced, and thereby saving power consumption.

In some embodiments, a connection portion between the side wall 411 of the recess and the bottom wall 412 of the recess may be arc-shaped or streamlined, which may improve a smoothness of the air flow while turning from the first air duct 42 to the second air duct 43 and may reduce drag.

In some embodiments, the side wall 411 of the recess and the bottom wall 412 of the recess are configured at an obtuse angle, so that an inner diameter of the recess may gradually increase along a direction from the bottom wall towards the refrigeration cavity 04, thereby facilitating the air flow to enter the axial flow fan 21 through the first air duct 42 and the second air duct 43.

In some embodiments, as illustrated in Fig. 5 and Fig. 6, the fan 02 may include a centrifugal fan 22. The side wall 411 of the recess and the bottom wall 412 of the recess may configured at an obtuse angle, so that the inner diameter of the recess may gradually increase along the direction from the bottom wall towards the refrigeration cavity 04.

The centrifugal fan 22 may be a type of fan that adopts the centrifugal force to deliver air. An operating principle of the centrifugal fan 22 may be: the air flow may be drawn into an interior of the fan through rotating impellers, then the air flow may be accelerated through the blades on the impeller, and the air flow may be pushed towards the air outlet through the centrifugal force, therefore delivery and pressurization of the air flow may be achieved. The centrifugal fan 22 may have a greater air pressure and flow rate, which may achieve a stronger convection effect. The air outlet 221 of the centrifugal fan 22 may be perpendicular to the air inlet 222, and the side wall 411 of the recess may be obtuse to the bottom wall 412 of the recess, such that the inner diameter of the recess may gradually increase along a direction from the bottom wall towards the refrigeration cavity 04, facilitating the diversion and deflection of the air flow discharged from the air outlet 221 of the centrifugal fan 22. In this way, an air pressure loss of the air flow, during a process of flowing from the air outlet 221 through the first air duct 42 to an outside of the mounting cavity, may be reduced, thereby improving the convective effect.

In some embodiments, a degree of the angle between the side wall 411 of the recess and the bottom wall 412 of the recess may be designed as required, and different degrees of the angle may achieve different diversion and deflection effects.

In some embodiments, the side wall 411 of the recess may also have a curved surface structure, capable of diverting the air flow discharged from the air outlet of the centrifugal fan 22 out of the mounting cavity defined by the recess.

In some embodiments, since the air outlet 221 of the centrifugal fan 22 may be perpendicular to the air inlet 222, an interval may not be provided between the centrifugal fan and the bottom wall 412 of the recess, so as to increase an integration degree of the vehicle refrigerator and improve a space utilization rate of the refrigeration cavity.

In some embodiments, the vehicle refrigerator may also include a first baffle 05. The first baffle 05 may be movably connected to the fan 02. The first baffle 05 may optionally cover at least part of an opening on the side of the first air duct 42 close to the refrigeration cavity 04.

In some embodiments, the first baffle 05 may be movably connected to the fan 02, and first baffle 05 may optionally cover at least part of the opening on the side of the first air duct 42 close to the refrigeration cavity 04. In this way, an air intake rate or air exhaust rate at that air outlet may be achieved by adjusting the first baffle 05, thereby enhancing a convenience of adjusting the air flow rate of the fan 02 and improving a user experience.

In some embodiments, as illustrated in Fig. 1, the vehicle refrigerator may also include the first baffle 05, the first baffle 05 may be movably connected to the inner wall of the door 12. The first baffle 05 may optionally cover at least part of the opening on the side of the first air duct 42 close to the refrigeration cavity 04.

In some embodiments, the first baffle 05 may be movably connected to the inner wall of the door 12 and selectively covers at least part of the opening on the side of the first air duct 42 close to the refrigeration cavity 04, allowing for the adjustment of the intake or exhaust volume at that outlet by adjusting the first baffle 05, thereby enhancing the convenience of adjusting the air volume of the fan 02 and improving the user experience.

In some embodiments, the refrigeration assembly 03 may be arranged outside the refrigeration cavity 04. The refrigeration assembly 03 may conduct heat transfer with the refrigeration cavity 04 through the cabinet 11.

In an application scenario, the refrigeration assembly 03 may be not in communication with the refrigeration cavity 04. A refrigeration of the refrigeration cavity 04 may be achieved through a refrigeration of the cabinet 11, which may facilitate the definition of a closed refrigeration cavity 04 by the cabinet 11, thereby enhancing a refrigeration and insulation effect within the refrigeration cavity 04. The structure is simple, and is easy to produce and assembly.

In some other embodiments, the refrigeration assembly may include the compressor, the condenser, the condenser fan, the evaporator and other refrigeration-related parts, which are arranged outside the refrigeration cavity. A cooling capacity may be transferred to the refrigeration cavity through a cooling cabinet of the evaporator. This heat conduction manner may mainly rely on natural convective heat transfer, which has a low heat transfer coefficient and a slow cooling rate. However, in the present disclosure, the fan may be arranged in the refrigeration cavity to enhance the air flow convective effect, thereby increasing the cooling rate and cooling uniformity.

In some embodiments, the vehicle refrigerator may also include an adapter. The adapter may be configured for detachable electrical connection to the refrigeration assembly 03 and/or the fan 02.

In an application scenario, an operating voltage of the vehicle refrigerator may be 12V DC. The adapter may convert alternating current (AC) to 12V direct current (DC). The adapter may connect to the refrigeration assembly 03 and/or the fan 02, thereby supplying power to the refrigeration assembly 03 and/or the fan 02.

This configured may enhance a multi-scenario adaptability of the vehicle refrigerator, improve the user experience, and achieve a detachable connection for easy storage.

In some embodiments, the vehicle refrigerator may also include a battery assembly. The battery assembly may achieve the electrical connection with the refrigeration assembly 03 and/or the fan 02. In this way, a portability of the vehicle refrigerator may be increased, and the user experience may be increased.

In some embodiments, the fan 02 may include a start switch. The user may manually control the fan 02 to turn on and turn off through the start switch. Further, the fan 02 may also include a wind force adjustment switch for user control, thereby facilitating energy conservation.

In some embodiments, the vehicle refrigerator may include a handle. The handle may be arranged on the cabinet 11. The handle may facilitate the users to move the vehicle refrigerator and may enhance the user experience.

In some embodiments, the refrigeration assembly 03 may include the compressor, the condenser, a capillary tube, the evaporator, the condenser fan, a door fan and other refrigeration-related components, so as to achieve cooling of the refrigeration cavity 04.

In some embodiments, the cabinet 11 may be provided with a power supply interface. The power supply interface may be arranged on the cabinet 11. The refrigeration assembly 03 and/or the fan 02 may be electrically connected to an external power supply system via the power supply interface. The power supply interface may be electrically connected to the external power supply system, such as a vehicle-mounted charger, so as to supply power to the refrigeration assembly 03 and/or the fan 02.

In some embodiment, the vehicle refrigerator may include a controller. The controller may be electrically connected to the battery assembly, the power supply interface or the adapter, and the fan, the compressor, the condenser fan, or the like, so as to control operation of these components.

In some embodiments, the vehicle refrigerator may be powered by a 12V/24V power supply of a car charger inside the vehicle.

Different from the related art, the vehicle refrigerator of the present disclosure may include the cabinet, the door, the fan and the refrigeration assembly. The cabinet may define the refrigeration cavity and the first opening. The first opening may be in communication with the refrigeration cavity. The door may cover the first opening. The fan may be arranged on the side of the door close to the refrigeration cavity. The refrigeration assembly may be mounted in the cabinet for cooling the refrigeration cavity. The fan may be arranged to enhance the air flow convective effect in the refrigeration cavity, thereby improving the cooling uniformity and cooling rate in the refrigeration cavity, and improving the cooling effect. Further, the fan may be arranged on the side of the door close to the refrigeration cavity, thereby facilitating assembly and operation of the fan. By arranging the fan on the side of the door close to the refrigeration cavity, the air flow convection effect in the refrigeration cavity may be enhanced. The refrigeration assembly may be mounted in the cabinet, thereby facilitating increasing of the positional stability of the refrigeration assembly, and thereby enhancing the reliability of the vehicle refrigerator.

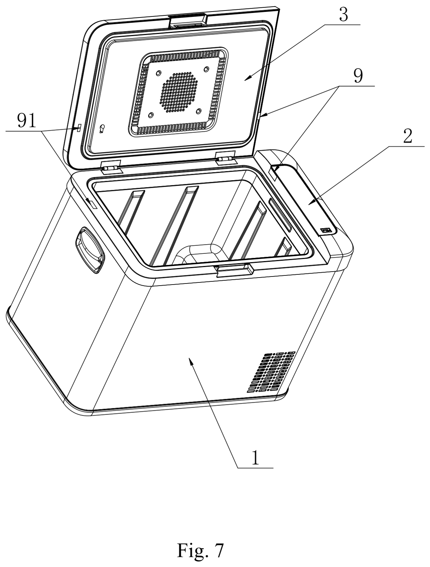

It should be noted that, in any embodiment corresponding to the implementation as illustrated in the aforementioned Fig. 1 to Fig. 6, similar modification may be made to the vehicle refrigerator by referring to any embodiment corresponding to the implementation as illustrated in Fig. 7 to Fig. 11 below.

For example, in the implementation corresponding to Fig. 7 to Fig. 11 below, a circulating fan 5 may be capable of providing power for the air flow. In the aforementioned embodiments, the fan 02 may be capable of providing power for the air flow. The fan 02 in any of the aforementioned embodiments may be modified by referring to the specific implementation of relevant technical features in the following embodiments. The relevant technical features may be such as the operation principle, connection with other components of the circulating fan 5, or the like. For another example, in the following embodiments, a cold air circulation cover plate 3 may be configured to setup the circulating fan 5. In the aforementioned embodiments, the door 12 may be configured to setup the fan 02 The door 12 in any of the aforementioned embodiments may be modified by referring to the specific implementation of the relevant technical features in the following embodiments. The relevant technical features may such as be the operating principle, connection with other components of the cold air circulation cover plate 3 or the like. For reference, other modifications to the vehicle refrigerator would not be elaborated here.

In any of the following embodiments, similar modification may be made to the vehicle refrigerator by referring to any embodiment corresponding to the implementation as illustrated in the aforementioned Fig. 1 to Fig. 6. This would not be elaborated here.

In the related art, the vehicle refrigerator may refer to a freezer that may be carried in a car. The vehicle refrigerator may be a new generation of refrigeration and cold storage appliances that have become popular in the international market in recent years. Generally, the vehicle refrigerator may be a compressor vehicle refrigerator. The compressor may be a traditional technology of traditional refrigerators. The compressor may have a low cooling temperature ranging from - 18 degrees to 10 degrees. The compressor may have a high cooling efficiency, may make ice and keep food fresh, and may have a large volume. The compressor may be also a development trend of the vehicle refrigerator in the future.

The related art may have the following deficiencies: when the vehicle refrigerator of the related art is in use, the cold air produced after cooling may generally flows slowly in the refrigeration cavity and a chill compartment. This makes it inconvenient for the cold air to circulate rapidly in the refrigeration compartment through rapid air flow, resulting in low cooling efficiency, which may be not conducive to increasing the cooling efficiency under a same operation power, and may be not conducive to rapid diffusion and heat exchange of the cold air.

The present disclosure may further propose a vehicle refrigerator as illustrated in Fig. 7 to Fig. 9. The specific implementation mode may adopt the following technical scheme: the vehicle refrigerator may include a vehicle refrigerator body 1, a side panel 2, and the cold air circulation cover plate 3. An inwardly-concave air-inducing chamber 4 may be defined at a middle of an inner side of the cold air circulation cover plate 3. The circulating fan 5 may be fixed in the middle of the inwardly-concave air-inducing chamber 4. The inwardly-concave air-inducing chamber 4 may be equivalent to the recess in the aforementioned embodiments. The cold air circulation cover plate 3 may be equivalent to the door 12 in those embodiments.

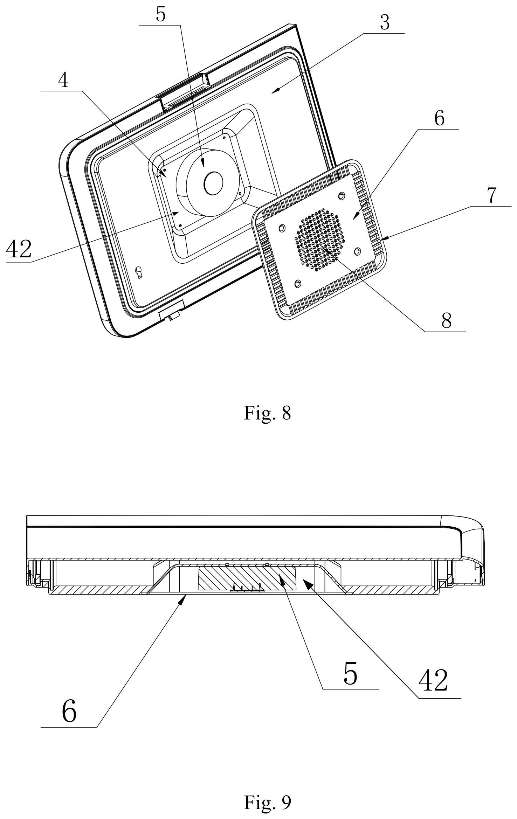

In some embodiments, as illustrated in Fig. 8, a second baffle 6 may be fixed to a surface of the inwardly-concave air-inducing chamber 4. An outer edge of the second baffle 6 may be provided with a perimeter of air-intake grilles 7. A middle of the second baffle 6 may be provided with air outlet holes 8 distributed in a matrix pattern. The air outlet holes 8 may keep in contact with air outlets in a middle of the circulating fan 5. The air-intake grilles 7 may be in communication with the inwardly-concave air-inducing chamber 4.

Specifically, as illustrated in Fig. 8, in some embodiments, the vehicle refrigerator may also include the second baffle 6. The second baffle 6 may cover the opening of the recess (the inwardly-concave air-inducing chamber 4) that may be defined on the inner wall of the door (cold air circulation cover plate 3). The fan (equivalent to the circulating fan 5) may be arranged in the recess. An outer periphery of the second baffle 6 may be provided with air-intake grilles 7 in communication with the recess. The air outlet holes 8, which are in communication with the air outlets, may be defined at the middle of the second baffle 6. Further, the air-intake grilles 7 may be arranged to surround the air outlet holes 8. Further, the air outlet holes 8 may be arranged to keep in close contact with the air outlets in the middle of the fan. In other words, the air outlet holes 8, which are in communication with both the air outlet of the fan and the refrigeration cavity, may be defined in a region where the fan may be attached to the second baffle 6.

The fan (the circulating fan 5) may be arranged at least partially spaced apart from a side wall of the recess to define the first air duct 42. The air flow may pass through the air-intake grilles 7, in sequence through the first air duct 42, the air inlet of the fan, the air outlet in the middle of the fan, and the air outlet holes 8 distributed in the matrix pattern, and enter the refrigeration cavity. It may be determined that, the first air duct 42 may be in communication with the air inlet of the fan and the air-intake grilles 7.

In some embodiments, the circulating fan 5 may be a drum-type turbine structure with a lateral-suction and bottom-discharge structure.

In some embodiments, as illustrated in Fig. 7, an inductive sensor 9 may be provided on one side of the cold air circulation cover plate 3. The inductive sensor 9 may be in inductive cooperation with the side panel 2, so as to achieve start and stop control of the circulating fan 5. An inner edge of the cold air circulation cover plate 3 may be also provided with a second inductive sensor 91. The second inductive sensor 91 may be connected to a Logo light and other electronic control devices.

Specifically, as illustrated in Fig. 7, in some embodiments, the vehicle refrigerator may also include the inductive sensor 9. The inductive sensor 9 may be arranged on one side of the door (the cold air circulation cover plate 3), and may be configured to control the start and stop of the fan (the circulating fan 5).

Furthermore, the vehicle refrigerator may include the cabinet and the door (the cold air circulation cover plate 3). The cabinet may include a main body 1 of the vehicle refrigerator and the side panel 2. The inductive sensor 9 may operate in inductive cooperation with the side panel 2, so as to control the start and stop of the fan (the circulating fan 5).

Furthermore, the vehicle refrigerator may also include the second inductive sensor 91 and a second electronic control device (equivalent to the aforementioned Logo light or other electronic control devices). The second inductive sensor 91 may be arranged on the inner edge of the door (the cold air circulation cover plate 3), and may be configured to control the start and stop of the second electronic control device.

In addition, in some embodiments, a sealing gasket ring may be provided between the air outlet of the circulating fan 5 and the air outlet hole 8, so as to achieve the isolation of the air-intake grilles 7 and the air outlet holes 8. In some embodiments, a back of the second baffle 6 may be provided with four sets of extended connecting column, which may match with bolts to fix the second baffle 6 to the inwardly-concave air-inducing chamber 4.

Specifically, in some embodiments, the vehicle refrigerator may also include the sealing gasket ring. The sealing gasket ring may be arranged between the air outlet of the fan (the circulating fan 5) and the air outlet hole 8, and may be configured to isolate the air-intake grilles 7 from the air outlet hole 8.

In some embodiments, one side of the sealing gasket ring may abut against a side of the fan close to the second baffle 6, and another side of the sealing gasket ring may abut against the second baffle 6. The sealing gasket ring may surround the air outlet holes 8 and the air outlet of the fan. The sealing gasket ring may be capable of isolating the air-intake grilles 7 from the air outlet hole 8, thereby reducing interference to exhaust from the air outlet hole 8.

Further, in some embodiments, air inlet and outlet approach of the air outlet holes 8 and the air-intake grilles 7 may be circulated in a reverse direction by a reverse drive of the circulating fan 5. In other words, when the circulating fan 5 is driven in reverse, the air outlet holes 8 may be configured as an air intake side and the air-intake grilles 7 may be configured as an air exhaust side.

The operating principle of the specific implementation may be as follows: the compressor inside the main body 1 of the vehicle refrigerator may cooperate with the evaporator to cool an interior of the cabinet. Then, the circulating fan 5 may blow air to the middle of the main body 1 of the vehicle refrigerator, thereby causing the cold air to rise from the periphery, and may enter the interior of the circulating fan 5 through the air-intake grilles 7 to define an internal circulation. In this way, the cold air deposited at the bottom may be allowed to fill the entire chill chamber.

The beneficial effect of the specific implementation adopting the aforementioned structure may be that: by mounting the circulating fan on the refrigerator door panel, the flow rate of the cold air in the chill compartment may be increased, the cooling efficiency may be enhanced. By adopting a design of wide air-intake and narrow air-exhaust, an initial velocity at the cold air outlet may be increased, thereby expanding a cold air circulating range. At the same time, sufficient air intake may prevent air noise due to drawing in the cold air.

The present disclosure may further propose a vehicle refrigerator as illustrated in Fig. 7 to Fig.11.

### First specific implementation

As illustrated in Fig. 7- Fig. 9, the present specific implementation may adopt the following technical scheme. The vehicle refrigerator may include the main body 1 of the vehicle refrigerator, the side panel 2, and the cold air circulation cover plate 3. The inwardly-concave air-inducing chamber 4 may be defined at the middle of the inner side of the cold air circulation cover plate 3. The circulating fan 5 may be fixed in the middle of the inwardly-concave air-inducing chamber 4. The second baffle 6 may be fixed on the surface of the inwardly-concave air-inducing chamber 4. A perimeter of the air-intake grille 7 may be provided on the outer edge of the second baffle 6. The air outlet holes 8 distributed in a matrix pattern may be defined in the middle of the second baffle 6. The air outlet holes 8 may keep in contact with the air outlets in the middle of the circulating fan 5. The air-intake grilles 7 may be in communication with the inwardly-concave air-inducing chamber 4.

In some embodiments, the circulating fan 5 may be a drum-type turbine structure with the lateral-suction and bottom-discharge structure. In some embodiments, the inductive sensor 9 may be provided on one side of the cold air circulation cover plate 3. The inductive sensor 9 may be in inductive cooperation with the side panel 2, so as to realize the start and stop control of the circulating fan 5. The second inductive sensor 91 may be further provided on the inner edge of the cold air circulation cover plate 3. The second inductive sensor 91 may be connected to the Logo light or other electronic control devices.

In addition, in some embodiments, the sealing gasket ring may be provided between the air outlet of the circulating fan 5 and the air outlet holes 8, so as to isolate the air-intake grilles 7 from the air outlet holes 8. In some embodiments, four sets of extended connecting columns matching bolts may be provided on the back of the second baffle 6, so as to fix the second baffle 6 to the inwardly-concave air-inducing chamber 4.

The operating principle of the specific implementation may be as follows: the compressor in the main body 1 of the vehicle refrigerator may cooperate with the evaporator to cool the interior of the cabinet. Then, the circulating fan 5 may blow air to the middle of the main body 1 of the vehicle refrigerator, causing the cold air to rise from all around, and to enter the interior of the circulating fan 5 through the air-intake grilles 7, so as to form the internal circulation. In this way, the cold air deposited at the bottom may fill the entire chill compartment.

The beneficial effect of the specific implementation adopting the aforementioned structure may be that: by mounting the circulating fan on the refrigerator door panel, the flow rate of the cold air in the chill compartment may be increased, the cooling efficiency may be enhanced. By adopting the design of wide air-intake and narrow air-exhaust, the initial velocity at the cold air outlet may be increased, thereby expanding the cold air circulating range. At the same time, sufficient air intake may prevent the air noise due to drawing in the cold air.

### Second specific implementation

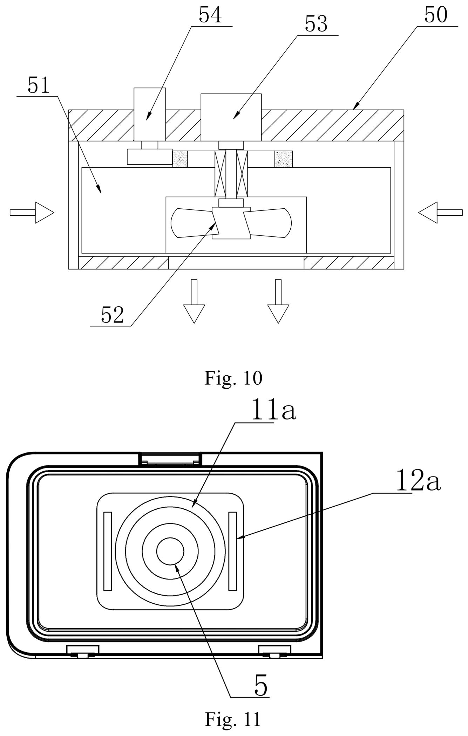

As illustrated in Fig. 10 and Fig. 11, the difference between the present specific implementation and the first specific implementation may be that: the circulating fan 5 may be replaced with a dual fan 50, and an ultraviolet lamp 11a and a semiconductor auxiliary cooling fin 12a may be added in the inwardly-concave air-inducing chamber 4. The dual fan 50 may include a turbine fan 51, a blade fan 52, a first drive motor 53, and a second drive motor 54. The turbine fan 51 may be provided inside the dual fan 50. The blade fan 52 may be embedded in a reserved slot at the middle of the turbine fan 51. A transmission shaft of the blade fan 52 may pass through a middle bearing of the turbine fan 51 and connect with the first drive motor 53. The turbine fan 51 may connect with the second drive motor 54 through a transmission gear disc at an upper end of the turbine fan 51. In some embodiments, the turbine fan 51 and the blade fan 52 may keep rotating at a constant speed, and a rotation speed of the blade fan 52 may be greater than or equal to that of the turbine fan 51. The turbine fan 51 may maintain a large flow rate at a low rotation speed, and the blade fan 52 may operate at a high speed to supplement air pressure. Through this arraignment, the air flow may be stabilized, and turbulence may be reduced.

Specifically, in the present embodiment, a part equivalent to the fan of the vehicle refrigerator may include the turbine fan 51. The turbine fan 51 may be provided inside the dual fan 50. The blade fan 52 may be provided in the reserved slot in the middle of the turbine fan 51. The first drive motor 53 may be in transmission connection with the blade fan 52. The second drive motor 54 may be in transmission connection with the turbine fan 51.

Further, in some embodiments, as illustrated in Fig. 11, a ring of ultraviolet lamps 11a may be provided in the middle of the inwardly-concave air-inducing chamber 4. The ultraviolet lamps 11a may be sleeved on an outside of the circulating fan 5. A pair of semiconductor auxiliary cooling fins 12a may be respectively provided on the left side and the right side of the inwardly-concave air-inducing chamber 4. A temperature of the semiconductor auxiliary cooling fins 12a may be controlled between 0-4 degrees. One of the pair of semiconductor auxiliary cooling fins 12a may correspond to one of the air-intake grilles 7 on the left side and the right side of the second baffle 6, and another of the pair of semiconductor auxiliary cooling fins 12a may correspond to another of the air-intake grilles 7 on the left side and the right side of the second baffle 6.

Specifically, in the present embodiment, as illustrated in Fig. 11, the vehicle refrigerator may further include the ultraviolet lamp 11a provided in the recess (the inwardly-concave air-inducing chamber 4), and the ultraviolet lamp 11a may be sleeved on the outside of the fan (the circulating fan 5).

Further, as illustrated in Fig. 11, the vehicle refrigerator may further include the semiconductor auxiliary cooling fin 12a provided in the recess (the inwardly-concave air-inducing chamber 4). Further, the vehicle refrigerator may include two semiconductor auxiliary cooling fins 12a oppositely provided on both sides of the fan. Further, the temperature of the semiconductor auxiliary cooling fins 12a may be controlled between 0-4 degrees. Further, the semiconductor auxiliary cooling fins 12a may be arranged corresponding to the air-intake grilles 7. It may be determined that, this arrangement may facilitate auxiliary cooling of the air flow entering the recess by using the semiconductor auxiliary cooling fins 12a.

The beneficial effect of the present specific implementation adopting the aforementioned structure may be: the circulating air may be controlled through the dual fan structure, a circulation speed may be increased, and functions of sterilization and auxiliary cooling may be added.

For those skilled in the art, it may be obvious that, the present disclosure may not be limited to the details of the aforementioned exemplary embodiments, and may be implemented in other specific forms without departing from the spirit or basic characteristics of the present disclosure. Therefore, from any point of view, the embodiments may be regarded as exemplary and non-restrictive. The scope of the present disclosure is defined by the claims rather than the aforementioned description. Therefore, all changes falling within the meaning and scope of equivalent elements of the claims are included in the present disclosure.

The aforementioned descriptions may be only the implementation approaches of the present disclosure, and may not thus limit the patent scope of the present disclosure. Any equivalent structure or equivalent process transformation made by using the contents of the description and drawings of the present disclosure, or directly or indirectly application in other related technical fields, may be similarly included in the patent protection scope of the present disclosure.

## Claims

1. A vehicle refrigerator, comprising:
a cabinet, defining a refrigeration cavity and a first opening; wherein the first opening is in communication with the refrigeration cavity;
a door, movably over the first opening;
a fan, arranged on a side of the door close to the refrigeration cavity; and
a refrigeration assembly, mounted on the cabinet, and configured to cool the refrigeration cavity.

2. The vehicle refrigerator as claimed in claim 1, wherein
an inner wall of the door defines a recess, the recess is in communication with the refrigeration cavity, and the fan is at least partially arranged in a mounting cavity defined in the recess.

3. The vehicle refrigerator as claimed in claim 2, wherein
the fan is spaced apart from a side wall of the recess, to define a first air duct;
the first air duct is in communication with the refrigeration cavity.

4. The vehicle refrigerator as claimed in claim 3, wherein
the fan comprises an axial flow fan; the axial flow fan is spaced apart from a bottom wall of the recess to define a second air duct; the second air duct is in communication with an air vent of the axial flow fan and with the first air duct.

5. The vehicle refrigerator as claimed in claim 3, wherein
the fan comprises a centrifugal fan; the side wall of the recess is arranged at an obtuse angle with a bottom wall of the recess, so that an inner diameter of the recess gradually increases along a direction from the bottom wall towards the refrigeration cavity.

6. The vehicle refrigerator as claimed in claim 3, wherein
the vehicle refrigerator further comprises a first baffle; the first baffle is movably connected to an inner wall of the door or to the fan; the first baffle selectively covers at least part of an opening of the first air duct, wherein the opening is on a side of the first air duct close to the refrigeration cavity.

7. The vehicle refrigerator as claimed in claim 2, wherein
the vehicle refrigerator further comprises a second baffle; the second baffle covers an opening of the recess; the fan is arranged in the recess; and
an air-intake grille is arranged at an outer periphery of the second baffle; the air-intake grille is in communication with the recess; an air outlet hole is defined in a middle of the second baffle, and the air outlet hole is in communication with an air outlet of the fan.

8. The vehicle refrigerator as claimed in claim 1, wherein
the vehicle refrigerator further comprises an inductive sensor; the inductive sensor is arranged on one side of the door, and configured to control start and stop of the fan.

9. The vehicle refrigerator as claimed in claim 8, wherein
the cabinet comprises a vehicle refrigerator main body and a side panel; and
the inductive sensor is in inductive cooperation with the side panel to control the start and stop of the fan.

10. The vehicle refrigerator as claimed in claim 1, wherein
the vehicle refrigerator further comprises a second inductive sensor and a second electronic control device; the second inductive sensor is arranged on an inner edge of the door, and is configured to control start and stop of the second electronic control device.

11. The vehicle refrigerator as claimed in claim 7, wherein
the vehicle refrigerator further comprises a sealing gasket ring; the sealing gasket ring is arranged between the air outlet of the fan and the air outlet hole, and is configured to isolate the air-intake grille from the air outlet hole.

12. The vehicle refrigerator as claimed in claim 2, wherein
the vehicle refrigerator further comprises an ultraviolet lamp; the ultraviolet lamp is arranged in the recess; and the ultraviolet lamp is sleeved on an outside of the fan.

13. The vehicle refrigerator as claimed in claim 2, wherein
the vehicle refrigerator further comprises a semiconductor auxiliary cooling fin;
the semiconductor auxiliary cooling fin is arranged in the recess.

14. The vehicle refrigerator as claimed in claim 7, wherein
the vehicle refrigerator further comprises a semiconductor auxiliary cooling fin, the semiconductor auxiliary cooling fin is arranged in the recess; the semiconductor auxiliary cooling fin is configured to match with the air-intake grille.

15. The vehicle refrigerator as claimed in claim 7, wherein
the fan is at least partially spaced apart from a side wall of the recess to define a first air duct; the air outlet hole is defined in a region where the fan is arranged in contact with the second baffle; the air outlet hole is in communication with the air outlet of the fan and with the refrigeration cavity.

16. The vehicle refrigerator as claimed in claim 4, wherein
an air inlet and an air outlet of the axial flow fan are arranged in a straight line parallel to a rotation axis of a blade of the axial flow fan.

17. The vehicle refrigerator as claimed in claim 1, wherein
the fan comprises a dual fan; the dual fan comprises:
a turbine fan, arranged in an interior of the dual fan;
a blade fan, arranged in a reserved slot in a middle of the turbine fan;
a first drive motor, in transmission connection with the blade fan; and
a second drive motor, in transmission connection with the turbine fan;
wherein a rotational speed of the blade fan is greater than or equal to that of the turbine fan.

18. The vehicle refrigerator as claimed in claim 17, wherein
a transmission shaft of the blade fan passes through a middle bearing of the turbine fan, and is in transmission connection with the first drive motor.

19. The vehicle refrigerator as claimed in claim 17, wherein
the turbine fan is in transmission connection with the second drive motor through a transmission gear disc, the transmission gear disc is arranged at an upper end of the turbine fan.

20. The vehicle refrigerator as claimed in claim 7, wherein
air inlet and outlet approach of the air outlet hole and the air-intake grille are, under a reverse drive of the fan, circulated in a reverse direction.
